# EUROPÄISCHE PATENTSCHRIFT

(11) **EP 1 575 859 B1**
(45) Veröffentlichungstag und Bekanntmachung des Hinweises auf die Patenterteilung: **26.03.2008**
(21) Anmeldenummer: 03795851.9
(22) Anmeldetag: 28.11.2003
(51) Int. Cl.: B65H 59/40

(54) **FADENMESSGERÄT, INSBESONDERE FÜR INSTATIONÄRE ANWENDUNGEN**
THREAD MEASURING DEVICE, ESPECIALLY FOR CHANGING APPLICATIONS
APPAREIL DE MESURE DE FIL, DESTINE NOTAMMENT A DES APPLICATIONS NON STATIONNAIRES

(30) Priorität: 12.12.2002 DE 10257997
(43) Veröffentlichungstag der Anmeldung: 21.09.2005
(73) Patentinhaber: Memminger-IRO GmbH, 72280 Dornstetten (DE)
(72) Erfinder: SAWALL, Rolf-Reiner, verstorben (DE); WÖRNER, Christoph, 72270 Baiersbronn (DE); MÜHLBERG, Karl-Heinz, 72280 Dornstetten (DE)
(74) Vertreter: Rüger, Barthelt & Abel Patentanwälte
(86) Internationale Anmeldenummer: PCT/EP2003/013418
(87) Internationale Veröffentlichungsnummer: WO 2004/052765

(56) Entgegenhaltungen:
- DE-A- 10 101 747
- US-A- 2 472 142
- US-A- 2 564 150
- US-A- 3 992 936

## Beschreibung

Die Erfindung betrifft ein Fadenmessgerät, das als Handmessgerät vorgesehen ist.

Fadenverbrauchende Maschinen ziehen häufig von so genannten Spulengattern eine Vielzahl einzelner Fäden ab, die zu der Maschine laufen. In der Praxis kommt dabei gelegentlich der Wunsch auf, die Fadenmenge und/oder die Fadengeschwindigkeit der zu der Maschine laufenden Fäden bestimmen zu können. Dazu ist beispielsweise aus der DE-OS 2557593 ein FadenMessgerät bekannt, das als Handmessgerät aufgebaut und für Freihandmessungen geeignet ist. Dieses Fadenmessgerät weist ein pistolenförmiges zweischenkliges Gehäuse auf, dessen einer Schenkel als Handgriff ausgebildet ist und dessen anderer Schenkel an seinem freien Ende einen Fadenfänger trägt. Dieser wird durch einen schwenkbar gelagerten Hebel gebildet, der an seinem freien Ende einen Zapfen mit verdicktem Kopf als Fadenleitelement trägt. Konzentrisch zu der Drehachse des Schwenkhebels ist eine Trommel drehbar gelagert, die mit einer Drehzahlmesseinrichtung verbunden ist. Der Schwenkhebel ist über einen Zahnstangenantrieb mit einem Betätigungshebel verbunden, der an der Vorderseite des den Handgriff bildenden Gehäuseteils zugänglich ist. Er kann hier gegen die Kraft einer Vorspannfeder auf den Griff zu bewegt werden, wodurch der Schwenkhebel eine Schwenkbewegung um etwa 180° vollführt. Hatte er zuvor mit seinem Fadenleitelement einen Faden hintergriffen, wird der Faden dadurch an die drehbar gelagerte Trommel angelegt, die somit von der Fadenbewegung in Drehung versetzt wird. Die Drehzahl der Trommel ist ein Maß für die Fadengeschwindigkeit.

Die Messung der Fadengeschwindigkeit ist für einige Anwendungsfälle ausreichend. Es wird jedoch eine vielseitigere Verwendung des Fadenmessgeräts angestrebt.

Aus der DE 101 01.747 A1 ist ein Fadenspannungsmesser für Handmessungen bekannt, der ein Gehäuse mit einer Anzeigeeinrichtung aufweist. Das schlanke Gehäuse ist an einer Seite mit drei von dem Gehäuse weg ragenden Stiften versehen, über die der Faden läuft. Die zwischen den Stiften wirkende Kraft entspricht der Fadenspannung. Sie wird erfasst und angezeigt. Außerdem sind an den Enden der Stifte Rollen angeordnet, über die der Faden läuft. Die Drehung wenigstens einer der Rollen kann erfasst und zur Messung der Fadenlänge angezeigt werden. Es ist des Weiteren möglich, zwei der Stifte axial zu bewegen, um den Faden zu ergreifen oder freizugeben.

Des Weiteren ist aus der US-A-2 472 142 ein Handmessgerät mit einem schwenkbar gelagerten Fadenfanghebel bekannt. Das Messgerät ist zur Messung der Fadenspannung, nicht aber zur Messung der Fadengeschwindigkeit eingerichtet. Der Fadenfanghebel ist zur Durchführung der Messung freizugeben, wobei er durch eine Feder in eine Messstellung gezogen wird. Er ist insoweit federnd gelagert.

Es ist Aufgabe der Erfindung, ein verbessertes Fadenmessgerät anzugeben:

Das erfindungsgemäße Fadenmessgerät ist für Freihandmessungen geeignet. Es weist ein Gehäuse mit einem Handgriff und einem daran vorgesehenen Betätigungsorgan auf. Außerdem weist das Fadenmessgerät einen Fadenfänger auf, der zwischen einer Fangposition und einer Messposition verstellbar beweglich gelagert ist. Über einen Betätigungsmechanismus kann er mittels des Betätigungsorgans zwischen seiner Fangposition und seiner Messposition hin- und herbewegt werden. Außerdem ist ein Fadenleitelement vorgesehen, über das der Fadenfänger den Faden führt, wenn er sich in Messposition befindet. Zwischen dem Fadenleitelement und dem in Messposition befindlichen Fadenfänger ist ein Fadenspannungsmesser angeordnet, der zur Erfassung der Fadenspannung dient und ein dieser entsprechendes elektrisches Signal liefert. Somit ist eine Grundvoraussetzung für eine vielseitigere Anwendung des Fadenmessgeräts geschaffen. Es kann nicht nur die Fadengeschwindigkeit oder die Fadenmenge sondern auch die Fadenspannung gemessen werden, was den Anwendungsbereich des Handmessgeräts wesentlich erweitert. Außerdem ist mit der erfindungsgemäßen Anordnung eine Voraussetzung geschaffen, die Fadenspannung nahezu vollkommen unabhängig vom Geschick des Bedieners zu messen. Es kommt weder darauf an, in welchem Winkel das Fadenmessgerät zu dem Faden gehalten wird, noch ist sonstige Handfertigkeit von Nöten. Der Faden läuft zu beiden Seiten des Fadenspannungsmessers über jeweils wenigstens ein Fadenleitelement, so dass der Winkel, mit dem der Faden den Fadenspannungsmesser streift, ohne Zutun des Bedieners richtig festgelegt ist. Es können dadurch Fehlmessungen vermieden werden. Auch kann der Faden während der Messung kaum von dem Fadenmessgerät abspringen, auch dann nicht wenn es mit seinem Griff nicht ganz parallel zu dem Faden gehalten wird.

Das von dem Fadenfänger getragene Fadenführungselement ist vorzugsweise eine reibungsarm drehbar gelagerte Fadenrolle, die von dem Faden in Drehung versetzt wird. So werden genaue Fadenspannungsmessungen möglich, ohne die Fadenspannung an dem laufenden Faden zu verfälschen.

Die Messposition des Fadenfängers wird durch ein Anschlagmittel festgelegt, so dass die Position unabhängig vom Geschick des Bedieners und von etwaigen Toleranzen in dem Betätigungsmechanismus präzise eingehalten wird. Das Anschlagmittel ist beispielsweise eine den Bewegungsweg des Fadenfängers begrenzende Anlagefläche, ein Zapfen, ein Vorsprung oder dergleichen.

Der Fadenfänger ist ein schwenkbar gelagerter Hebel. Die Ausbildung des Fadenfängers als Schwenkhebel hat den Vorzug, dass ein Faden besonders leicht aufgenommen und in Messposition überführt werden kann.

Außer dem Fadenspahnungsmesser ist das Fadenleitelement mit einem Drehgeber verbunden. Dadurch können Fadengeschwindigkeit, Fadenmenge und dergleichen gemessen werden.

Der Fadenspannungsmesser weist vorzugsweise ein als Stift, beispielsweise als Keramikstift, ausgebildetes Fadenauflageelement auf, das sich im Wesentlichen parallel zu der Drehachse des Hebels quer zu dem durchlaufenden Faden erstreckt. Der Stift kann unmittelbar von einem Kraftsensor getragen sein. Unter dem Einfluss der von dem ausgelenkten Faden ausgehenden Kraft ergibt sich dabei keine merkliche Bewegung des Stifts, wodurch der Fadenspannungsmesser schnell und präzise anspricht.

Der Fadenspannungsmesser ist mit einer in dem Handmessgerät innerhalb des Gehäuses angeordneten Verarbeitungseinrichtung verbunden, die mit einer Displayeinrichtung verbunden ist. Die Displayeinrichtung dient in Verbindung mit einem Bedienknopf der Steuerung des Fadenmessgeräts. Der Bedienknopf ist vorzugsweise auf eine Einhandbedienung eingerichtet. Dies wird erreicht, indem er als Dreh-Drucktaster ausgebildet ist. Die Einstellung unterschiedlicher Messvorgaben kann über eine Menüführung erfolgen, die von der Verarbeitungseinrichtung vorgegeben wird. Die Auswahl von Menüpunkten kann durch Drehung des Bedienknopfs und die Auswahl von Menüpunkten durch Drücken des Bedienknopfs erfolgen.

Die Verarbeitungseinrichtung ermöglicht eine erhöhte Funktionalität. Beispielsweise können Fadenspannung in unterschiedlichen Einheiten, Fadendurchschnittsspannung, Fadenspitzenspannung usw. gemessen werden. Außerdem kann die Abweichung von einer Normalspannung angezeigt werden. Darüber hinaus ist es möglich, die Fadenlänge in verschiedenen Einheiten, wie Meter, Zoll, Yard anzugeben. Es ist darüber hinaus möglich, Fadengeschwindigkeit in unterschiedlichen Einheiten sowie als Durchschnittswert, als Spitzenwert, sowie die Fadengeschwindigkeitsschwankung anzuzeigen.

Bei einer vorteilhaften Ausführungsform ist die Verarbeitungseinrichtung außerdem mit einer Schnittstelle verbunden, die Signale von einer äußeren Quelle erhalten kann. Die Schnittstelle kann als Steckverbindungseinrichtung für Kabel oder auch kabellos ausgebildet sein. Beispielsweise können hier Signale ankommen, die die Maschinendrehzahl kennzeichnen. Die Verarbeitungseinrichtung kann damit gewichtete Größen wie Fadenlänge pro Maschinenumdrehung bestimmen und anzeigen.

Das Handmessgerät weist zur Stromversorgung der Verarbeitungseinrichtung ein oder mehrere Batterien oder Akkus auf. Diese sind vorzugsweise in dem Gehäuse in einem Batterieraum untergebracht, dessen Verschlussdeckel zugleich das Betätigungsorgan bildet. Der Betätigungsmechanismus kann dabei als Riegeleinrichtung dienen, die den Verschlussdeckel freigibt, sobald dieser zur Überführung des Fadenfängers aus seiner Fangposition in die Messposition auf das Gehäuse zu bzw. in dieses hinein gedrückt wird. Die Entriegelung des Verschlussdeckels stört hier nicht, denn dieser ist durch die Hand des Bedieners gehalten. Sobald er jedoch freigegeben wird, springt er in seine Ausgangsposition zurück, in der er wiederum durch den Betätigungsmechanismus verriegelt ist. Soll er abgenommen werden kann dies erfolgen, indem der Fadenfänger in seiner Messposition gehalten wird, während das Betätigungsorgan freigegeben wird.

Weitere Einzelheiten vorteilhafter Ausführungsformen der Erfindung ergeben sich aus der Zeichnung, der Beschreibung oder Unteransprüchen. In der Zeichnung ist ein Ausführungsbeispiel der Erfindung veranschaulicht. Es zeigen:
- Figur 1: ein Fadenmessgerät in Seitenansicht,
- Figur 2: das Fadenmessgerät nach Figur 1 in einem anderen Maßstab in Draufsicht,
- Figur 3: das Fadenmessgerät nach Figur 2 in einem anderen Maßstab in ausschnittsweiser und teilweise aufgeschnittener Darstellung,
- Figur 4: den Fadenfänger des Fadenmessgeräts in Fangposition,
- Figur 5: den Fadenfänger des Fadenmessgeräts in Messposition,
- Figur 6: das Fadenmessgerät in längs geschnittener, schematisierter Darstellung mit Betätigungsorgan in unbetätigtem Zustand,
- Figur 7: das Fadenmessgerät nach Figur 6 mit Betätigungsorgan in Betätigungsstellung,
- Figur 8: das Fadenmessgerät nach Figur 6 und 7 mit abgenommenem Batteriefach-Verschlussdeckel und

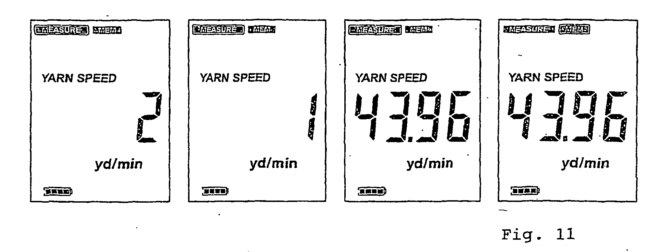

- Fig. 9 bis 11: verschiedene Displayanzeigen des Fadenmessgeräts.

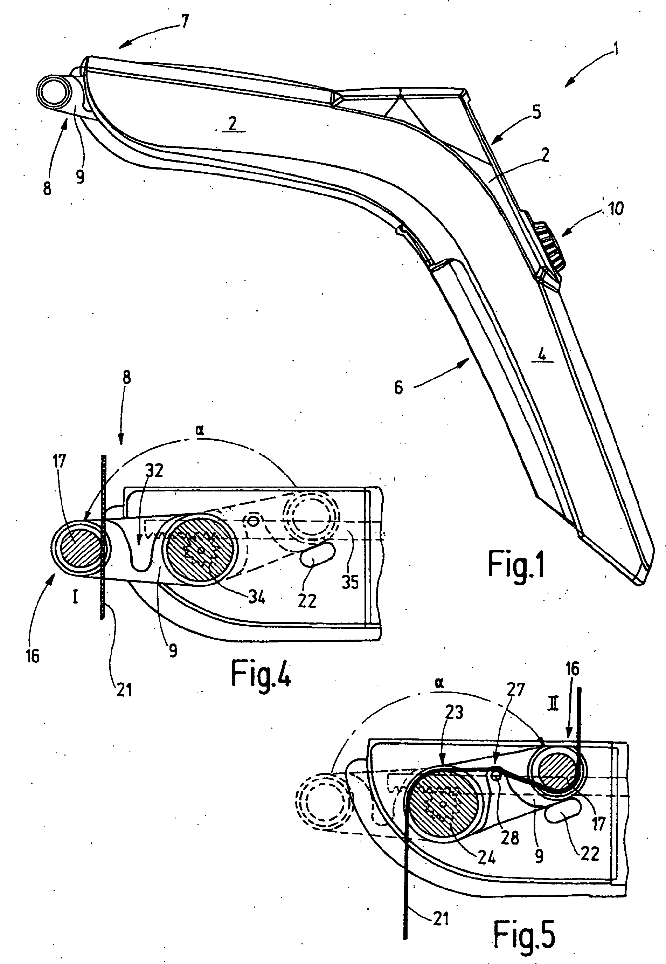

In Figur 1 ist ein Fadenmessgerät 1 veranschaulicht, das ein längliches, dabei stumpfwinklig abgewinkeltes Gehäuse 2 mit zwei Gehäuseabschnitten 3, 4 aufweist. Der längere Gehäuseabschnitt 4 dient als Handgriff. An seiner in Gebrauch dem Benutzer zugewandten Rückseite ist ein Display 5 sowie ein Bedienknopf 10 angeordnet. An seiner von dem Benutzer weg weisenden Vorderseite ist ein verschiebbar oder schwenkbar gelagerter Auslösehebel 6 angeordnet. Dieser kann schalenförmig als Gehäuseabschnitt oder Gehäuseteil ausgebildet sein und, wie an späterer Stelle noch deutlicher wird, beispielsweise zugleich als Batteriefachdeckel dienen.

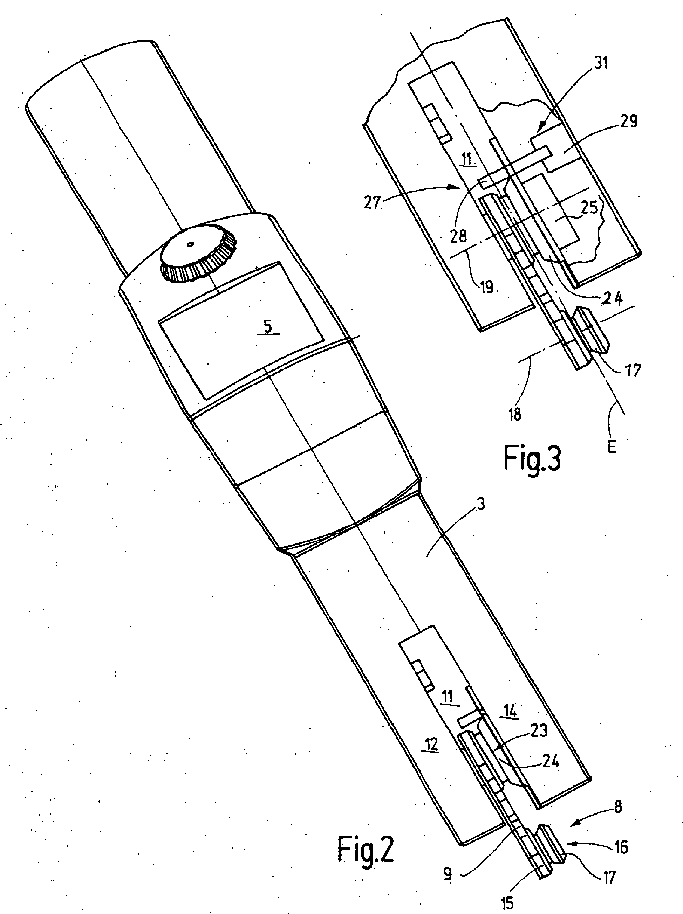

Das Fadenmessgerät 1 weist an dem vorderen freien Ende 7 einen Fadenfänger 8 auf, zu dem ein schwenkbar gelagerter Hebel 9 gehört. Der in Figur 2 in Draufsicht erkennbare Hebel 9 ist zwischen zwei gabelartig einen Durchgang 11 begrenzenden Schenkeln 12, 14 des Gehäuseabschnitts 3, 4 angeordnet. Der Hebel 9 trägt an seinem freien Ende 15 ein Fadenführungselement 16 in Form einer drehbar gelagerten Fadenrolle 17, deren Drehachse 18 parallel zu der Schwenkachse 19 des Hebels 9 ausgerichtet ist (Figur 3). Der durch den Hebel 9 gebildete Fadenfänger 8 ist zwischen zwei Positionen I, II schwenkbar, die aus den Figuren 4 und 5 hervorgehen. Der Schwenkwinkel α beträgt dabei vorzugsweise etwas weniger als 180°. Die Position I ist eine Fangposition, in der eine gedachte Verbindungslinie zwischen der Drehachse 18 und der Schwenkachse 19 etwa rechtwinklig zu einem anzutastenden Faden 21 steht. Die andere Position II (Figur 5) ist die Messposition, in der der Hebel 9 an einem Anschlagzapfen 22 anliegt.

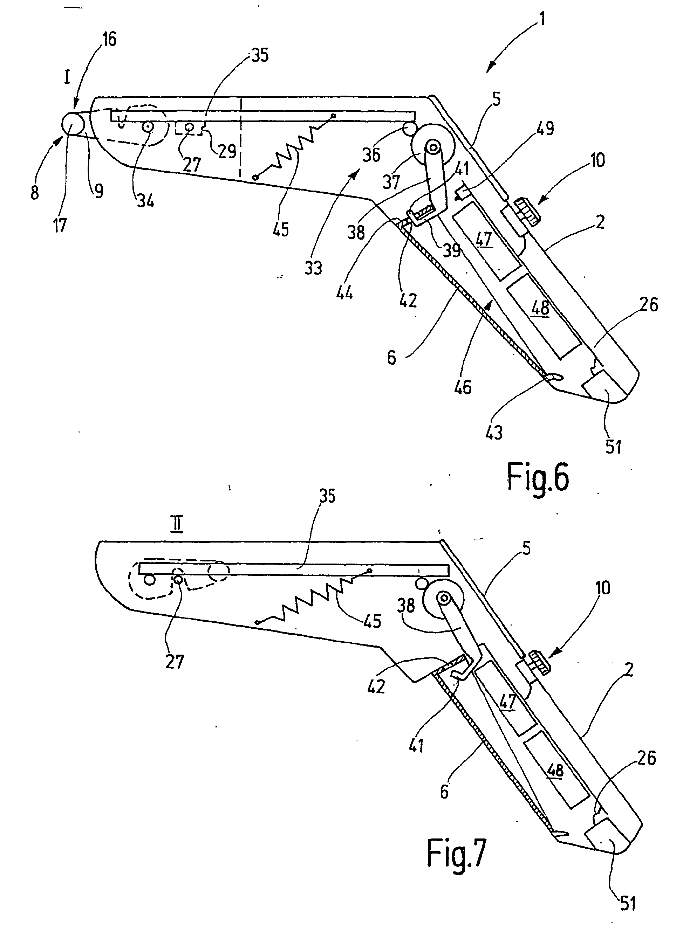

Konzentrisch zu der Schwenkachse 19 oder in unmittelbarer Nachbarschaft derselben ist ein Fädenleitelement 23 in Form einer drehbar gelagerten Fadenrolle 24 angeordnet, die wie auch die Fadenrolle 17 eine Fadenrille aufweist. Der Fadenrillen der Fadenrollen 17, 24 sind, wie Figur 3 veranschaulicht, in einer gemeinsamen Ebene E angeordnet, auf der die Schwenkachse 19 und die Drehachse 18 senkrecht stehen. Die Fadenrolle 24 ist mit einem Drehgeber 25 verbunden. Dieser gibt elektrische Signale entsprechend der Drehung der Fadenrolle 24 ab. Der Drehgeber 25 ist mit einer nicht weiter veranschaulichten Verarbeitungseinrichtung 26 verbunden, die beispielsweise auf der aus den Figuren 6 und 7 ersichtlichen Leiterplatte in Form eines Mikrorechners untergebracht ist. Die Verarbeitungseinrichtung 26 ist mit dem Display 5 verbunden, das zur Geräteeinstellung, Bedienung und zur Messwertanzeige dient.

Zwischen dem Fadenleitelement 23 und dem in Messposition befindlichen Fadenführungselement 16 ist, wie Figur 5 veranschaulicht, ein Fadenauflageelement 27 in Form eines Stifts 28 angeordnet, der sich etwa parallel zu der Schwenkachse 19 erstreckt (Figur 3). Der Stift 28 ragt mit seinem freien Ende in den Durchgang 11 und ist an seinem anderen Ende mit einem Kraftsensor 29 verbunden. Der Kraftsensor 29 und der Stift 28 bilden einen Fadenspannungsmesser 31. Dieser ist mit der Verarbeitungseinrichtung verbunden und sendet elektrische Signale an diese, die der erfassten Fadenspannung entsprechen. Wie Figur 5 veranschaulicht, ist der Stift 28 oberhalb einer die Fadenrolle 24 mit der Fadenrolle 17 verbindenden Tangente angeordnet, so dass der durchlaufende Faden 21 mit einem stumpfen Winkel über den Stift 28 läuft. Die genaue Größe dieses Winkels wird durch die Position des Anschlagzapfens 22 festgelegt.

Der Hebel 9 ist mit einem trichterförmigen Ausschnitt 32 versehen, der beim Schwenken des Hebels 9 in Messposition über den Stift 28 findet, ohne diesen zu berühren.

Das Verschwenken des Hebels 9 erfolgt durch Betätigung des Auslösehebels 6, der insoweit ein Betätigungsorgan bildet. Die Figuren 6 und 7 veranschaulichen ein Ausführungsbeispiel für den zugehörigen Betätigungsmechanismus 33, der den Auslösehebel 6 mit dem Hebel 9 verbindet. Zu dem Betätigungsmechanismus 33 gehört ein drehfest mit dem Hebel 9 verbundenes Zahnrad 34, das mit einer in dem Gehäuse 2 axial verschiebbar gelagerten Zahnstange 35 kämmt. Die Zahnstange 35 steht mit ihrem anderen Ende mit einem Zahnrad 36 in Verbindung, das in dem Gehäuse 2 drehbar gelagert ist. Das Zahnrad 36 kämmt mit einem Zahnrad 37, das drehbar gelagert, dabei aber drehfest mit einem Hebel 38 verbunden ist. Dieser weist ein hakenförmig ausgebildetes Ende 39 auf, das in Ruheposition mit einem nasenförmigen Fortsatz 41 in eine Öffnung 42 des Auslösehebels 6 greift. Dieser ist schalenförmig aufgebaut, wobei er an seinem einen Ende einen seitlich weg ragenden Zapfen oder einen ähnlichen Vorsprung zur schwenkbaren Lagerung in einer Kulissenführung 43 aufweist. Die Öffnung 42 ist etwa radial zu der so durch die Kulissenführung 43 definierten Schwenkachse ausgerichtet, die in Figur 6 etwa senkrecht auf der Zeichenebene steht. Der Hebel 38 ist so angeordnet, dass der Vorsprung 41 aus der Öffnung 42 herausfährt, wenn der Hebel 6 auf das Gehäuse 2 zu und in dieses hineingedrückt wird. Dabei drückt eine vordere Wand 44 gegen den Hebel 38 auch dann, wenn der Vorsprung 41 aus der Öffnung 42 herausgefahren ist. Im Ruhezustand schließt der Auslösehebel 6 mit dem Hebel 38 vorzugsweise einen stumpfen oder spitzen Winkel ein.

An geeigneter Stelle weist der Betätigungsmechanismus 33 ein Federmittel auf. Beispielsweise kann dieses durch eine Zugfeder 45 gebildet sein, die die Zahnstange 35 in einer ausgewählten Längsrichtung so vorspannt, dass der Hebel 9 auf seine Fangposition I hin vorgespannt ist.

Der Auslösehebel 6 ist als Batteriefachdeckel ausgebildet. Er überwölbt ein darunter liegendes Batteriefach 46, indem ein oder mehrere Batterien 47, 48 zur Spannungsversorgung der Verarbeitungseinrichtung 26 angeordnet sind. Sie können von der Leiterplatte getragen sein. Diese trägt beispielsweise einen zusätzlichen Schalter 49, der die Verarbeitungseinrichtung aktiviert. Der Betätigungsmechanismus 33 weist vorzugsweise ein gewisses Spiel oder eine Elastizität auf, die ein weiteres Niederdrücken des Auslösehebels 6 zur Aktivierung des Schalters 49 gestattet, nachdem der Hebel 9 seine Messposition II erreicht hat.

Das insoweit beschriebene Fadenmessgerät 1 arbeitet wie folgt:

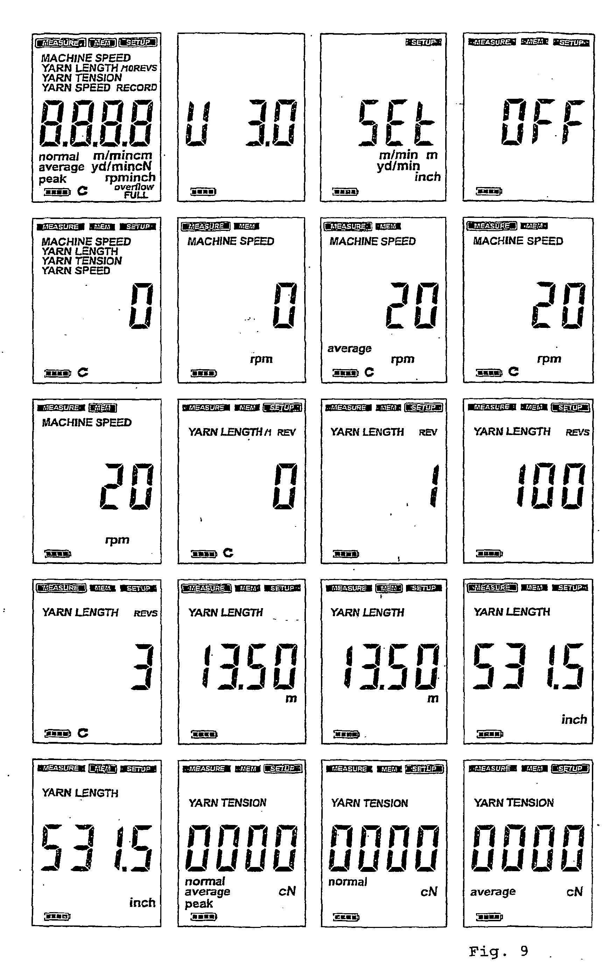

Das Fadenmessgerät 1 wird durch einen Tastendruck auf den Bedienknopf 10 eingeschaltet. Alternativ oder ergänzend kann vorgesehen werden, das Fadenmessgerät 1 durch Betätigung des Auslösehebels 6 einzuschalten. Das Ausschalten des Fadenmessgeräts erfolgt automatisch nach Ablauf einer Wartezeit ohne weitere Betätigung oder alternativ durch längeren Druck auf den Bedienknopf. Das Display 5 ist in Figur 9 oben links mit allen Anzeigemöglichkeiten veranschaulicht. Durch Drehen und/oder Drücken des Bedienknopfs 10 (je nach Ausführungsform) können die drei Grundbetriebsarten Messen (MEASURE), Speichern (MEM) und Einstellung (SETUP) ausgewählt werden. Das dem Messen dienende Menü ist in Figur 9, linke Spalte, zweite Zeile, veranschaulicht. Ist es aktiviert, kann die Messung der Maschinendrehzahl, der Fadenlänge, der Fadenspannung und der Fadengeschwindigkeit ausgewählt werden. Die zweite Zeile der Figur 9 veranschaulicht verschiedene Anzeigen, z.B. für Durchschnittsdrehzahl oder für aktuelle Drehzahl (dritte und vierte Spalte). Die erste Zeile veranschaulicht hingegen verschiedene Einstellungen (SETUP), beispielsweise für die ausgewählte Einheit (m/min, m, yd/min oder inch).

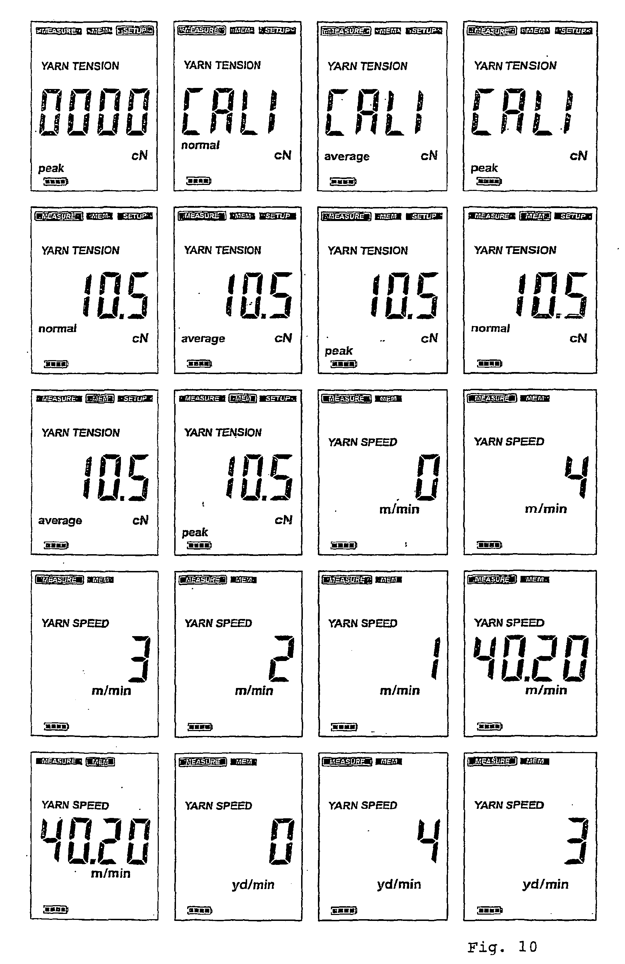

Ähnlich kann die Messung der Fadenlänge in verschiedenen Betriebsarten ausgewählt werden (Figur 9, dritte Zeile, zweite Spalte bis fünfte Zeile, erste Spalte). Die Menüs und Anzeigen des Displays 5 für die Fadenspannung sind Figur 9, Zeile fünf, Spalte 2 bis Figur 10, Zeile drei, Spalte 2 zu entnehmen. Die übrigen Anzeigen betreffen die Fadengeschwindigkeit.

Ist der gewünschte Messmodus ausgewählt, wird das Fadenmessgerät, wie Figur 4 veranschaulicht, an den Faden herangeführt, bis die Fadenrolle 17 den Faden 21 hintergreift. Wird nun der Auslösehebel 6 betätigt, klappt der Hebel 9 aus seiner Fangposition I in seine Messposition II, wie Figur 5 veranschaulicht. Der Hebel 9 legt sich dabei an den Anschlagzapfen 22 an und findet so eine definierte Position. In dieser läuft der Faden 21 über den Stift 28, wobei an dem Kraftsensor 29 eine der Fadenspannung entsprechende Kraft registriert wird. Diese wird von der Verarbeitungseinrichtung in einen Fadenspannungswert umgesetzt und auf dem Display 5 gemäß Figur 9 oder 10, angezeigt. Je nach Auswahl kann dabei die Durchschnittsspannung, die Spitzenspannung, die Sollspannung, die Spannungsabweichung von dieser oder dergleichen angezeigt werden.

Die eigentliche Messung wird dann aktiviert, wenn der Bedienhebel 6 fest in das Gehäuse 2 gedrückt wird, nachdem der Hebel 9 seine Messposition II bereits erreicht hat. Der Bedienhebel 6 betätigt dann den Schalter 49 zur Durchführung der Messung. In seiner davor liegenden Position, in der der Hebel 9 den Anschlagzapfen 22 bereits erreicht hat, der Schalter 49 jedoch noch nicht betätigt ist, kann der Bedienhebel 6 bedarfsweise durch einen nicht weiter veranschaulichten Schieber arretiert werden.

Die Leiterplatte, bzw. die auf dieser angeordnete Verarbeitungseinrichtung 26 kann, wie die Figuren 6 und 7 veranschaulichen, mit einer Schnittstelle 51 in Form einer an dem unteren Ende des Gehäuses 2 vorgesehenen Steckdose oder einer drahtlosen Funkstrecke versehen sein. Die Schnittstelle 51 dient zum Ein- und Ausleiten von Signalen (Daten). Solche Signale oder Daten können die Maschinendrehzahl einer angeschlossenen Strickmaschine oder ähnliche externe Daten repräsentieren, die von der Verarbeitungseinrichtung berücksichtigt werden. Dies ermöglicht beispielsweise die Anzeige der Maschinendrehzahl, gemäß Figur 9, Spalte 2, Zeile 2 bis Spalte 1, Zeile 3. Außerdem ermöglicht die Zurverfügungstellung externer Daten die Berechnung und Anzeige bezogener Größen, wie beispielsweise die Fadenlänge pro Maschinenumdrehung (Figur 9, Spalte 2, Zeile 3). Auch können über die Schnittstelle 51 bedarfsweise Daten an ein externes Gerät weiter geleitet werden. Dies kann insbesondere dann interessant sein, wenn mit dem Fadenmessgerät 1 eine Vielzahl von Fäden nacheinander abzutasten und zu kontrollieren ist.

Der Wechsel der Batterien 47, 48 erfolgt folgendermaßen:

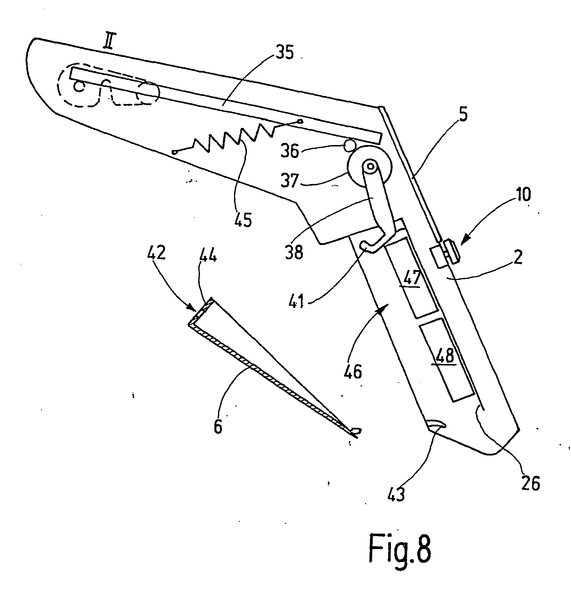

Soll das Batteriefach 46 geöffnet werden, wird der Auslösehebel 6 in das Gehäuse 2 gedrückt. Der Vorsprung 41 fährt dabei aus der Öffnung 42, so dass keine Verriegelung mehr und auch keine sonstige formschlüssige Verbindung zwischen dem Auslösehebel 6 und dem Hebel 38 besteht. Der den Batteriefachdeckel bildende Auslösehebel 6 kann jedoch nicht herabfallen, weil er von den Fingern der Bedienperson festgehalten ist, die den Auslösehebel 6 gegen die Kraft der Zugfeder 45 halten muss. Zur Abnahme des Batteriefachdeckels wird nun der Hebel 9 beispielsweise von Hand in seiner Messposition gehalten, während der Auslösehebel 6 losgelassen wird. Er kann, weil der Hebel 38 in seiner, aus Figur 7 ersichtlichen ausgelenkten Position verharrt, nun frei abgenommen werden. Dies ist aus Figur 8 ersichtlich.

Die Montage des Batteriefachdeckels erfolgt auf umgekehrtem Weg. Der Hebel 9 wird in Messposition II überführt, wonach der Auslösehebel 6 in die Öffnung des Batteriefachs eingesetzt werden kann. Wird der Hebel 9 freigegeben, verhakt der Hebel 38 sich mit dem Auslösehebel 6 und hält diesen wiederum am Platz.

Das erfindungsgemäße Fadenmessgerät 1 ist ein Handmessgerät mit einem Fadenfänger 8, der bei Betätigung eines Auslösehebels 6 den Faden 21 über ein Fadenauflageelement 27 eines Kraftsensors 29 legt. Die erfasste Fadenspannung wird, wie auch die erfasste Fadengeschwindigkeit einer Verarbeitungseinrichtung, zur Anzeige und Weiterverarbeitung zugeführt. Das Gerät gestattet eine Einhandbedienung. Das bumerangförmige Gehäuse 2 ist an einem Ende als Handgriff ausgebildet, an dem sowohl ein Auslösehebel als auch ein Bedienknopf 10, der als Dreh-Druck-Taster ausgebildet ist, als auch ein Display 5 angeordnet ist. Der Bedienknopf 10 kann mit dem Daumen des Bedieners gedreht und gedrückt werden, so dass eine vollständige Bedienung, d.h. Auswahl aller Mess- und Betriebsmodi, nur mit dem Daumen möglich ist. Die Messung wird durch den Auslösehebel 6 durchgeführt, der den Fadenfänger 8 sowie einen Messaktivierungsschalter 49 betätigt.

### Bezugszeichenliste:

- 1: Fadenmessgerät
- 2: Gehäuse
- 3, 4: Gehäuseabschnitte
- 5: Display
- 6: Auslösehebel
- 7: Ende
- 8: Fadenfänger
- 9: Hebel
- 10: Bedienknopf
- 11: Durchgang
- 12, 14: Schenkel
- 15: Ende
- 16: Fadenführungselement
- 17: Fadenrolle
- 18: Drehachse
- 19: Schwenkachse
- 21: Faden
- 22: Anschlagzapfen
- 23: Fadenleitelement
- 24: Fadenrolle
- 25: Drehgeber
- 26: Verarbeitungseinrichtung
- 27: Fadenauflageelement
- 28: Stift
- 29: Kraftsensor
- 31: Fadenspannungsmesser
- 32: Ausschnitt
- 33: Betätigungsmechanismus
- 34: Zahnrad
- 35: Zahnstange
- 36, 37: Zahnrad
- 38: Hebel
- 39: Ende
- 41: Vorsprung
- 42: Öffnung
- 43: Kulissenführung
- 44: Wand
- 45: Zugfeder
- 46: Batteriefach
- 47, 48: Batterien
- 49: Schalter

- E: Ebene

## Patentansprüche

1. Fadenmessgerät (1) für Freihandmessungen,
mit einem Gehäuse (2), das einen Handgriff (4) mit einem Betätigungsorgan (6) aufweist,
mit einem Fadenfänger (8), der einen Hebel (9) aufweist, der an seinem freien Ende ein Fadenführungselement (16) trägt, und der zwischen zwei Positionen (I, II), von denen eine eine Fangposition (I) und die andere eine Messposition (II) ist, um eine Schwenkachse (19) schwenkbar gelagert und über einen Betätigungsmechanismus (33) mit dem Betätigungsorgan (6) verbunden ist und in Messposition (II) geschwenkt wird,
mit einem Fadenleitelement (23), das an einer Stelle durch eine Fadenrolle (24) gebildet und zwischen den beiden Positionen (I, II) angeordnet ist, wobei die Fadenrolle (24) mit einem Drehgeber (25) verbunden ist, um eine Messung der Fadengeschwindigkeit zu ermöglichen,
mit einem Fadenspannungsmesser (31), der an einer Stelle zwischen der Messposition (II) und dem Fadenleitelement (23) angeordnet ist, wobei die Messposition (II) des Fadenfängers (8) durch ein Anschlagmittel (22) festgelegt ist, und
mit einer Verarbeitungseinrichtung (26), die mit dem Fadenspannungsmesser (31) und einer Displayeinrichtung (5) verbunden ist.

2. Fadenmessgerät nach Anspruch 1, **dadurch gekennzeichnet, dass** das Fadenführungselement (16) eine drehbar gelagerte Fadenrolle (17) ist.

3. Fadenmessgerät nach Anspruch 1, **dadurch gekennzeichnet, dass** als ein Fadenauflageelement (27) ein sich im Wesentlichen parallel zu der Schwenkachse (19) des Hebels (9) erstreckender Stift (28) ist, der von einem Kraftsensor (29) getragen ist.

4. Fadenmessgerät nach Anspruch 1, **dadurch gekennzeichnet, dass** die Verarbeitungseinrichtung mit einem Steuerschalter verbunden ist, dessen Bedienknöpf (10) an dem Handgriff (4) angeordnet ist.

5. Fadenmessgerät nach Anspruch 4, **dadurch gekennzeichnet, dass** der Steuerschalter ein Dreh-Drucktaster ist.

6. Fadenmessgerät nach Anspruch 1, **dadurch gekennzeichnet, dass** die Verarbeitungseinrichtung zur Einstellung unterschiedlicher Betriebsmodi auf der Displayeinrichtung (5) eine menüorientierte Eingabe bereitstellt.

7. Fadenmessgerät nach Anspruch 1, **dadurch gekennzeichnet, dass** die Verarbeitungseinrichtung (26) eine Schnittstelle (51) zur Aufnahme externer Signale aufweist.

8. Fadenmessgerät nach Anspruch 1, **dadurch gekennzeichnet, dass** die Verarbeitungseinrichtung (26) eine Schnittstelle (51) zur Abgabe von Signalen an eine externe Einrichtung aufweist.

9. Fadenmessgerät nach Anspruch 1, **dadurch gekennzeichnet, dass** das Gehäuse (2) zwei längliche Schenkel (3, 4) aufweist, die miteinander einen stumpfen Winkel einschließen.

10. Fadenmessgerät nach Anspruch 9, **dadurch gekennzeichnet, dass** einer der Schenkel (3) an seinem freien Ende (7) den Fadenfänger (8) trägt, wobei der andere Schenkel (4) als Handgriff dient.

11. Fadenmessgerät nach Anspruch 1, **dadurch gekennzeichnet, dass** in dem Handgriff ein Batterieraum (46) für wenigstens eine Versorgungsbatterie (47, 48) angeordnet ist.

12. Fadenmessgerät nach Anspruch 11, **dadurch gekennzeichnet, dass** der Batterieraum (46) einen Verschlussdeckel aufweist, der zugleich das Betätigungsorgan (6) bildet.

13. Fadenmessgerät nach Anspruch 12, **dadurch gekennzeichnet, dass** der Betätigungsmechanismus (33) mit dem unbetätigten Betätigungsorgan (6) durch einen Riegel (41) in formschlüssigem Eingriff steht, um dieses am Platz zu sichern.

14. Fadenmessgerät nach Anspruch 13, **dadurch gekennzeichnet, dass** der Riegel (41) durch die Betätigung des Betätigungsorgans (6) quer zu einem Abschnitt (44) des Betätigungsorgans (6) bewegt wird, um dieses zu entriegeln.

## Claims

1. Thread measuring device (1) for free-hand measurements,
with a housing (2), which has a handle (4) with an operating member (6),
with a thread catcher (8), which has a lever (9), which bears a thread guide element (16) at its free end and which is disposed to pivot around a pivot axis (19) between two positions (I, II), of which one is a catch position (1) and the other is a measuring position (II), and is connected to the operating member (6) by means of an operating mechanism (33) and is pivoted in measuring position (II),
with a thread guide element (23), which at one location is formed by a thread roll (24) and is arranged between the two positions (I, II), wherein the thread roll (24) is connected to a rotary encoder (25) to enable a measurement of the thread speed,
with a thread tension meter (31), which is arranged at a location between the measuring position (II) and the thread guide element (23), wherein the measuring position (II) of the thread catcher (8) is defined by a stop means (22), and
with a processing device (26), which is connected to the thread tension meter (31) and a display device (5).

2. Thread measuring device according to claim 1, **characterised in that** the thread guide element (16) is a rotatably disposed thread roll (17).

3. Thread measuring device according to claim 1, **characterised in that** a pin (28) extending substantially parallel the pivot axis (19) of the lever (9) and supported by a force sensor is [?] as a thread supporting element (27).

4. Thread measuring device according to claim 1, **characterised in that** the processing device is connected to a control switch, the operating button (10) of which is arranged on the handle (4).

5. Thread measuring device according to claim 4, **characterised in that** the control switch is a rotary pushbutton.

6. Thread measuring device according to claim 1, **characterised in that** the processing device provides a menu-oriented input for setting different operating modes on the display device (5).

7. Thread measuring device according to claim 1, **characterised in that** the processing device (26) has an interface (51) for picking up external signals.

8. Thread measuring device according to claim 1, **characterised in that** the processing device (26) has an interface (51) for emitting signals to an external device.

9. Thread measuring device according to claim 1, **characterised in that** the housing (2) has two elongated legs (3, 4), which together enclose an oblique angle.

10. Thread measuring device according to claim 9, **characterised in that** one of the legs (3) bears the thread catcher (8) at its free end (7), wherein the other leg (4) serves as a handle.

11. Thread measuring device according to claim 1, **characterised in that** a battery area (46) for at least one supply battery (47, 48) is arranged in the handle.

12. Thread measuring device according to claim 11, **characterised in that** the battery area (46) has a closing cover, which at the same time forms the operating member (6).

13. Thread measuring device according to claim 12, **characterised in that** when the operating member (6) is not operated the operating mechanism (33) stands in positive-locking engagement therewith by means of a locking bar (41) in order to secure said operating member.

14. Thread measuring device according to claim 13, **characterised in that** by the operation of the operating member (6) the locking bar (41) is moved transversely to a section (44) of the operating member (6) in order to unlock this.

## Revendications

1. Appareil de mesure de fil (1) pour des mesures manuelles, qui comporte :
- un boîtier (2) équipé d'une poignée (4) et d'un organe d'actionnement (6),
- un preneur de fil (8) présentant un levier qui porte à son extrémité libre un élément de guidage de fil (16) et qui peut, entre deux positions (I, II) dont l'une est une position de prise (I) et l'autre une position de mesure (II), basculer autour d'un axe de basculement (19), le basculement en position de mesure (II) étant effectué par un mécanisme d'actionnement (3) relié à l'organe d'actionnement (6),
- un élément de guidage de fil (23) disposé en un endroit entre les deux positions (I, II) et qui est constitué par un galet de fil (24), relié à un encodeur (25) permettant de mesurer la vitesse d'un fil,
- un appareil de mesure de tension de fil (31) disposé en un endroit entre la position de mesure (II) et l'élément de guidage de fil (23), la position de mesure (II) du preneur de fil (8) étant déterminée par un moyen de butée (22),
- un dispositif de traitement (28) relié à l'appareil de mesure de tension (31) et à un dispositif d'affichage (5).

2. Appareil de mesure de fil selon la revendication 1, **caractérisé en ce que** l'élément de guidage de fil (16) est un galet de fil (17) monté en rotation.

3. Appareil de mesure de fil selon la revendication 1, **caractérisé en ce qu'**il présente, comme élément d'appui de fil (27), une broche (28) qui est essentiellement parallèle à l'axe de basculement (19) du levier (9) et qui est portée par un capteur de force (29).

4. Appareil de mesure de fil selon la revendication 1, **caractérisé en ce que** le dispositif de traitement est relié à un contacteur de commande dont la tête de manoeuvre (10) est disposée sur la poignée (4).

5. Appareil de mesure de fil selon la revendication 4, **caractérisé en ce que** le contacteur de commande est un bouton-poussoir rotatif.

6. Appareil de mesure de fil selon la revendication 1, **caractérisé en ce que** le dispositif de traitement dispose, pour régler des modes de fonctionnement différents sur le dispositif d'affichage (5), d'une entrée pilotée par menu.

7. Appareil de mesure de fil selon la revendication 1, **caractérisé en ce que** le dispositif de traitement (26) présente une interface (51) pour recevoir des signaux externes.

8. Appareil de mesure de fil selon la revendication 1, **caractérisé en ce que** le dispositif de traitement (26) présente une interface (51) pour délivrer des signaux à un dispositif externe.

9. Appareil de mesure de fil selon la revendication 1, **caractérisé en ce que** le boîtier (2) présente deux branches allongées (3, 4) faisant entre elles un angle obtus.

10. Appareil de mesure de fil selon la revendication 9, **caractérisé en ce que** la branche (3) présente à son extrémité libre (7) le preneur de fil (8) tandis que l'autre branche (4) sert de poignée.

11. Appareil de mesure de fil selon la revendication 1, **caractérisé en ce** dans la poignée se trouve une chambre de piles (46) pour accueillir au moins une pile d'alimentation (47, 48).

12. Appareil de mesure de fil selon la revendication 11, **caractérisé en ce que** la chambre de piles (46) possède un couvercle de fermeture qui sert en même temps d'organe d'actionnement (8).

13. Appareil de mesure de fil selon la revendication 12, **caractérisé en ce que** le mécanisme d'actionnement (39), par un verrou (41) est en prise verrouillée par combinaison de formes, avec l'organe d'actionnement (6) non activé, pour sécuriser la position de cet organe.

14. Appareil de mesure de fil selon la revendication 13, **caractérisé en ce que** le verrou (41), quand l'organe d'actionnement (6) est activé, se déplace perpendiculairement à une partie (44) de cet organe (6), pour le déverrouiller.
